# EUROPÄISCHE PATENTSCHRIFT

(11) **EP 2 006 009 B1**
(45) Veröffentlichungstag und Bekanntmachung des Hinweises auf die Patenterteilung: **08.08.2012**
(21) Anmeldenummer: 08010252.8
(22) Anmeldetag: 05.06.2008
(51) Int. Cl.: B01D 39/20, B01D 39/16, B01D 46/10

(54) **Filtermedium**
Filter medium
Médium filtrant

(30) Priorität: 11.06.2007 DE 102007027299
(43) Veröffentlichungstag der Anmeldung: 24.12.2008
(73) Patentinhaber: Johns Manville Europe GmbH, 86399 Bobingen (DE)
(72) Erfinder: Hassmann, Christian, 86868 Mittelneufnach (DE); Meitinger, Hans-Jürgen, 86845 Grossaitingen (DE); Plötz, Kurt, 65529 Waldems (DE); Umminger, Jürgen, 97922 Lauda-Königshofen (DE); Schöps, Michael, 10781 Berlin (DE)
(74) Vertreter: Mai, Dörr, Besier

(56) Entgegenhaltungen:
- EP-A1- 1 048 335
- EP-A2- 0 960 645
- DE-A1- 19 630 522
- US-A- 3 035 943

## Beschreibung

Die vorliegende Erfindung betrifft einen Filter aus einem mehrlagigen Filtermedium, ein Verfahren zu dessen Herstellung und die Verwendung des erfindungsgemäßen Filters.

Der Einsatz von Filtern, insbesondere mehrlagigen Filtermedien, ist seit langem bekannt. So werden beispielsweise Luftfilter seit langem im Automobilsektor, in Klimaanlagen, Innenraumfiltern, Pollenfiltern, Reinraumfiltern, Haushaltsfiltern usw. eingesetzt. Auch in der Filterung von flüssigen Medien werden Filter seit langem eingesetzt. Als Beispiele hierfür sind Ölfilter und Hydraulikfilter.

In Abhängigkeit von dem Anwendungsgebiet werden die Filter angepasst um eine ausreichende Filtrationseffizienz und Standzeit zu erreichen. So werden LEF (Low Efficiency Filter) als Vorfilter in der Luft/Gas- und Flüssigkeitsfiltration eingesetzt, während High Efficiency Filter auch im Bereich HEPA (Luft) oder Wasseraufbereitung eingesetzt werden.

Aus US-A-5993501 sind mehrlagige Filtermedien und Filter bekannt, die aus einer steifen, plissierbaren Basisschicht, der eigentlichen Filterschicht und einer Abdeckung bestehen. Diese Filter sind bereits gut für die Gas-(Luft-) und Flüssigkeitsfiltration geeignet Dennoch besteht stets ein Bedarf an nochmals verbesserten Filtern, die insbesondere einen höheren Luftdurchsatz ermöglichen und gleichzeitig eine hohe Abscheideeffizienz aufweisen.

Es wurde überraschender Weise gefunden, dass die bekannten Filtermedien durch Einsatz spezieller Stützvliesschichten deutlich verbessert werden können.

Gegenstand der vorliegenden Erfindung ist somit ein Filter aus einem mehrlagigen Filtermedium umfassend:
a) mindestens eine Stützvliesschicht aus synthetischen, polymeren Fasern wobei
   a1) das Vlies ein Flächengewicht von 10 bis 500 g/m² aufweist,
   a2) das Vlies teilverstreckte und verstreckte Fasern aufweist,
   a3) der Titer der verstreckten Fasern im Bereich 2 bis 12 dtex liegt,
   a4) der Titer der teilverstreckten Fasern im Bereich 8 bis 25 dtex liegt,
   a5) das Vlies eine Luftdurchlässigkeit von mindestens 2500 1/m²sec aufweist,
b) mindestens eine Filterschicht die auf mindestens einer Seite des Stützvlieses angebracht ist,
c) mindestens eine Deckschicht die auf der der Stützschicht abgewandten Seite der Filterschicht angebracht ist,
d) gegebenenfalls mindestens eine Mikrofaser-Vliesschicht.

Bei der erfindungsgemäß eingesetzten Stützvliesschicht aus synthetischen, polymeren Fasern handelt es sich um ein Vlies welches plissierfähig ist.

Bei den Vliesen handelt es sich um Naßvliesstoffe, Spinnvliesstoffe oder trockengelegte Vliesstoffe, die mittels thermischer und/oder chemischer Bindung und/oder mechanischer Verfestigung verfestigt sind. Bei den Vliesen handelt es sich um Stapelfaservliese und/oder Spinnvliesstoffe.

Die bevorzugten Ausführungsformen für die nachfolgend bezeichneten Spinnvliesstoffe gelten auch für Stapelfaservliese.

Spinnvliesstoffe, d.h. sogenannte Spunbonds, werden durch eine Wirrablage von frisch schmelzgesponnenen Filamenten erzeugt wird. Die Filamente sind Endlos-Synthesefasern aus schmelzspinnbaren Polymermaterialien.

Geeignete Polymermaterialien sind beispielsweise Thermoplaste, vorzugsweise Polyamide, wie z.B. Polyhexamethylen-diadipamid, Polycaprolactam, aromatische oder teilaromatische Polyamide ("Aramide"), aliphatische Polyamide, wie z.B. Nylon, teilaromatische oder vollaromatische Polyester, Polycarbonate (PC), Polyphenylensulfid (PPS), Polyphenylenoxid (PPO), Polystyrol (PS), Polyvinylcarbazol (PVK), Polyacetal (POM), Polyarylether, Polyarylsulfon, Polyethersulfon, Polymere mit Ether- und Keto-gruppen, wie z.B. Polyetherketone (PEK) und Poly-etheretherketon (PEEK), Polyolefine, wie z.B. Polyethylen oder Polypropylen, oder Polybenzimidazole.

Bevorzugt umfassen bzw. bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diele haben 2 bis 4 C-Atome, wobei das Ethylenglycol besonders geeignet ist. Besonders vorteilhaft sind Spinnvliese, die zu mindestens 85 mol % aus Polyethylenterephthalat bestehen. Die restlichen 15 mol % bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Dielen, z. B. von Propandiol oder Butandiel, von Di- oder Triethylenglycol oder, sofern in geringer Menge vorhanden, von Polyglycol mit einem Molgewicht von ca. 500 bis 2000.

Besonders bevorzugt sind Polyester, die mindestens 95 mol % Polyethylenterephthalat (PET) enthalten, insbesondere solche aus unmodifiziertem PET.

Die in den Spinnvliesen enthaltenen Polyester haben vorzugsweise ein Molekulargewicht entsprechend einer intrinsischen Viskosität (IV), gemessen in einer Lösung von 1 g Polymer in 100 ml Dichloressigsäure bei 25 °C, von 0,6 bis 1,4.

In einer weiteren Ausführungsform der Erfindung kann das Spinnvlies auch ein schmelzbinderverfestigter Vliesstoff sein, welcher Träger- und Schmelzklebefasern enthält. Die Träger- und Schmelzklebefasern können sich von beliebigen thermoplastischen fadenbildenden Polymeren ableiten Trägerfasern können sich darüber hinaus auch von nicht schmelzenden fadenbildenden Polymeren ableiten. Derartige schmelzbinderverfestigte Spinnvliese sind beispielsweise grundsätzlich in EP-A-0,446,822 und EP-A-0,590,629 beschrieben.

Beispiele für Polymere, von denen sich die Trägerfasern ableiten können, sind Polyacrylnitril, Polyolefine, wie Polyethylen oder Polypropylen, im wesentlichen aliphatische Polyamide, wie Nylon 6.6, im wesentlichen aromatische Polyamide (Aramide), wie Poly-(p-phenylenterephthalat) oder Copolymere enthaltend einen Anteil an aromatischen m-Diamineinheiten zur Verbesserung der Löslichkeit oder Poly-(m-phenylenisophthalat), im wesentlichen aromatische Polyester, wie Poly-(phydroxybenzoat) oder vorzugsweise im wesentlichen aliphatische Polyester, wie Polyethylenterephthalat

Der Anteil der beiden Fasertypen zueinander kann in weiten Grenzen gewählt werden, wobei darauf zu achten ist, dass der Anteil der Schmelzklebefasern so hoch gewählt wird, dass der Vliesstoff durch Verklebung der Trägerfasern mit den Schmelzklebefasern eine für die gewünschte Anwendung ausreichende Festigkeit erhält aber andererseits die benötigte Luftdurchlässigkeit gewährleistet ist. Der Anteil des aus der Schmelzklebefaser stammenden Schmelzklebers im Vliesstoff beträgt üblicherweise weniger als 50 Gew.-% (bezogen auf das Gewicht des Vliesstoffes).

Als Schmelzkleber kommen insbesondere modifizierte Polyester mit einem gegenüber dem Vliesstoff-Rohstoff um 10 bis 50 °C, vorzugsweise 30 bis 50 °C abgesenkten Schmelzpunkt in Betracht. Beispiele für einen derartigen Schmelzkleber sind Polypropylen, Polybutylenterephthalat oder durch Einkondensieren längerkettiger Diole und/oder von Isophthalsäure oder aliphatischen Dicarbonsäuren modifiziertes Polyethylenterephthalat.

Die Schmelzkleber werden vorzugsweise in Faserfarm in die Vliese eingebracht.

Vorzugsweise sind Träger- und Schmelzklebefasern aus einer Polymerklasse aufgebaut. Darunter ist zu verstehen, dass alle eingesetzten Fasern aus einer Substanzklasse so ausgewählt werden, dass diese nach Gebrauch des Vlieses problemlos recycliert werden können. Bestehen die Trägerfasern beispielsweise aus Polyester, so werden die Schmelzklebefasern ebenfalls aus Polyester oder aus einer Mischung von Polyestern, z. B. als Bikomponentenfaser mit PET im Kern und einen niedriger schmelzenden Polyethylenterephthalat-Copolymeren als Mantel ausgewählt: Darüber hinaus sind jedoch auch Bikomponentenfasern möglich, die aus unterschiedlichen Polymeren aufgebaut sind. Beispiele hierfür sind Bikomponentenfasern aus Polyester und Polyamid (Kern/Hülle).

Die Einzelfasertiter der Träger- und der Schmelzklebefasern können innerhalb weiter Grenzen gewählt werden. Beispiele für übliche Titerbereiche sind 1 bis 16 dtex, vorzugsweise 2 bis 6 dtex.

Die die Vliesstoffe aufbauenden Filamente oder Stapelfasern können einen praktisch runden Querschnitt besitzen oder auch andere Formen aufweisen, wie hantel-, nierenförmige, dreieckige bzw. tri- oder multilobale Querschnitte. Es sind auch Hohlfasern und Bi- oder Mehrkomponentenfasern einsetzbar. Ferner lässt sich die Schmelzklebefaser auch in Form von Bi- oder Mehrkomponentenfasern einsetzen.

Die das Stützvlies bildenden Fasern können durch übliche Zusätze modifiziert sein, beispielsweise durch Antistatika, wie Ruß oder Zusätze welche eine elektrostatische Aufladung ermöglichen.

Das Flächengewicht der Stützvliesschicht beträgt vorzugsweise zwischen 20 und 300 g/m², besonders bevorzugt 20 und 200 g/m², insbesondere 40 und 200 g/m².

Je nach Anwendungsprofil der Filter, werden die die Stützvliese bildenden Spinnvliese nach ihrer Herstellung neben der hydrodynamischen Verfestigung zusätzlich einer chemischen und/oder thermischen Verfestigung unterworfen.

Hierzu werden die schmelzbinderverfestigbaren Spinnvliese, die neben Trägerfasern auch Bindefasern enthalten, in an sich bekannter Weise mit einem Kalander oder in einem Ofen thermisch verfestigt Die Fasern können auch eine Bi-Komponenten-Struktur (z.B. Kern/Mantel) aufweisen, bei der der Mantel das Bindepolymer ist.

Enthalten die Spinnvliese keine zur thermischen Verfestigung befähigten Bindefasern, so werden diese Spinnvliese mit einem chemischen Binder imprägniert. Hierzu kommen insbesondere Binder auf Basis von Acrylaten oder Styrolen in Frage. Der Binderanteil beträgt zweckmäßigerweise bis zu 30 Gew.-%, vorzugsweise 2 bis 25 Gew.-%. Die genaue Wahl des Binders erfolgt nach der speziellen Interessenlage des Weitenverarbeiters.

In einer weiteren Ausführungsform können auch flammhemmend modifizierte Binder verwendet werden oder sogar ganz auf Binder verzichtet werden.

In einer weiteren Ausführungsform der Erfindung weist das Stützvliese ein Prägemuster aus statistisch verteilten oder rapportmäßig angeordneten, kleinflächigen Einprägungen, vorzugsweise eine Punktprägung, auf, bei der die Preßfläche, d.h. die Gesamtheit aller dünnen verdichteten Stellen des Spinnvlieses 5 bis 30 %, vorzugsweise 8 bis 20 % seiner Gesamtfläche ausmachen. Dieses Prägemuster kann im Fall der schmelzbinderverfestigten Spinnvliese vorteilhafterweise bei der Kalander-Verfestigung aufgebracht werden. Wird das Stützvlies durch einen chemischen Binder endverfestigt kann das Prägemuster ebenfalls mittels eines Kalanders aufgeprägt werden. Dieses Prägemuster, das beim Durchlaufen des Spinnvlieses durch einen beheizten Kalander auf beide Oberflächen des Spinnvlieses, vorzugsweise aber nur auf eine Oberfläche des Spinnvlieses aufgebracht wird, weist eine Vielzahl kleiner Einprägungen auf, die eine Größe von 0,2 bis 4 mm², vorzugsweise 0,5 bis 2 mm², haben und durch dazwischen liegende, etwa gleich große, nicht geprägte Flächenelemente des Vlieses voneinander getrennt sind. Die Bestimmung der Fläche der verdichteten Stellen des Vlieses und der nicht verdichteten Stellen des Vlieses kann beispielsweise mittels mikroskopischer Querschnittsaufnahmen erfolgen.

Insofern das Stützvlies eine weitere Verfestigung benötigt, wird diese durch Vernadelung, sowohl mechanisch als auch hydrodynamisch, vorgenommen. Üblicherweise werden Nadeldichten von 20 bis 100 Stichen/cm² eingesetzt.

In einer bevorzugten Ausführungsform ist das Stützvlies ohne Vernadelung und ohne Zusatz von chemischen Bindern, jedoch mit thermoplastischen Bindern verfestigt worden.

Insofern das Stützvlies aus mindestens 2 unterschiedlichen Vliesen gebildet wird, werden diese vorzugsweise durch mechanische und/oder hydrodynamische Vernadelung mit einander verbunden. Neben dieser Methode kann die Laminierung der verschiedenen Vlieslagen des Stützvlieses auch mittels Kalander erfolgen.

In einer bevorzugten Ausführungsform der Erfindung besteht die Stützvliesschicht aus 2 bis 10 Vlieslagen, wobei das Gesamtflächengewicht der Stützvliesschicht zwischen 10 und 500 g/m², vorzugsweise 20 und 300 g/m², insbesondere 40 und 200 g/m², beträgt. Insofern die Stützvliesschicht einen mehrlagigen Aufbau besitzt sind mindestens 2 der Vlieslagen, vorzugsweise mindestens 3 der Vlieslagen, unterschiedlich. Insbesondere können Lagen von Schmelzbinderfasern zwischen den Vlieslagen aus Trägerfasern angeordnet sein

Die Einzeltiter der Fasern aus synthetischen Polymeren, welche das Stützvlies bilden, beträgt zwischen 2 und 20 dtex.

Das im erfindungsgemäßen Filter vorhandene Stützvlies wird aus verstreckten und teilverstreckten Fasern aus synthetischen Polymeren aufgebaut.
Der Anteil an teilverstreckten Fasern im Stützvlies beträgt mindestens 5 Gew.% (bezogen auf das Gesamtgewicht der Stützvliesschicht), vorzugsweise mindestens 10 Gew.%, besonders bevorzugt mindestens 20 Gew%.

Als verstreckte Fasern werden solche Faser bezeichnet, die einen Doppelbrechungsindex von 130 - 150 x10⁻³ aufweisen. Der Titer der verstreckten Fasern beträgt zwischen 2 und 12 dtex, vorzugsweise 4 bis 10 dtex.

Als teilverstreckte Fasern werden solche Faser bezeichnet, die einen Doppelbrechungsindex von 50 - 120 x10⁻³ aufweisen Der Titer der teilverstreckten Fasern beträgt zwischen 8 und 25 dtex, vorzugsweise 10 bis 20 dtex

In einer weiteren Ausführungsform haben die verstreckten Fasern einen geringeren Titer als die teilverstreckten Fasern.

Die verstreckten und teilverstreckten Fasern können in Form konkreter Schichten im Stützvliesstoff vorliegen oder sind miteinander vermischt. Bevorzugt liegen die verstreckten und teilverstreckten Fasern als Gemisch vor. In einer weiteren Ausführungsform bilden die verstreckten und teilverstreckten Fasern einen Gradienten im Stützvliesstoff. Hierbei ist es von Vorteil, wenn der Gradient, d.h. der Titer der Fasern von außen nach innen (bezogen auf den Querschnitt) ansteigt.

Das im erfindungsgemäßen Filter vorhandene Stützvlies besitzt eine Luftdurchlässigkeit von mindestens 2500 I/m² sec, vorzugsweise von mindestens 3500 I/m² sec, gemessen gemäß ISO 9237.

Das im erfindungsgemäßen Filter vorhandene Stützvlies kann noch zusätzlich mit üblichen Stoffen ausgerüstet sein, beispielsweise durch Antistatika oder Stoffe, die die Brandeigenschaften beeinflussen können. Außerdem ist eine hydrophobe oder hydrophile Ausrüstung möglich.

Die erfindungsgemäß eingesetzte Filterschicht unterliegen keiner besonderen Einschränkung. Die Auswahl der jeweiligen Filterschicht erfolgt in Abhängigkeit vom Anforderungsprofil.

Die Filterschichten können Vliese aus polymeren Fasern oder Filamenten sein. Die verwendeten Materialien sind vorzugsweise, Polyolefine, insbesondere PE und/oder PP, und Polyester, insbesondere PBT und/oder PET, jedoch sind auch alle anderen Materialien, die für die Stützschicht möglich sind, auch für die Filterschicht möglich. Die Vliese können mit Hilfe bekannter Methoden hergestellt werden. Beispielsweise kann das Filterelement ein Spunbondvlies oder ein Stapelfaservlies, hergestellt nach dem Naßlege- oder Trockenlegeverfahren sein, oder aber auch ein Vlies nach dem Airlaidverfahren oder einem ähnlichen Verfahren.

Zudem können die Filterschichten auch mittels Meltblownverfahren hergestellt werden oder aus Nanofasern bestehen, die z.B. mittels Elektrospinningverfahren hergestellt werden. Grundsätzlich gilt zudem, dass auch Mischungen verschiedener Faser/Filamentmaterialien, Titer und Faserquerschnitten möglich sind. Auch die Verwendung von Bikomponentenfaser und -filamenten ist möglich.

Neben sogenannten Filterpapieren sind Mineralfaservliese oder Glassfaservliese, vorzugsweise trocken gelegte Glasfaservliese (sogenannte "air laid" Vliese), bevorzugt.

Bei den Mineralfaservliesen handelt es sich um Vliese auf Basis von Alumosilikat-, Keramik-, Dolomitfasern oder Fasern von Vulkaniten wie z.B. Basalt Diabas-, Melaphyr. Diabase (Grünstein) und Melaphyre (sogenannte Paläobasalte).

Bei den Glasfaservliesen unterliegen die eingesetzten Glasfasern hinsichtlich des Glastyps keiner wesentlichen Einschränkung, so dass grundsätzlich alle Glastypen wie E-Glas, S-Glas, R-Glas, C-Glas eingesetzt werden können. Aus wirtschaftlichen Gründen wird E-Glas oder C-Glas bevorzugt. Besonders bevorzugt sind biolösliche Gläser.

Das Mineralfaservlies und das Glasfaservlies kann aus Filamenten, d.h. unendlich langen Fasern oder aus Stapelfasern gebildet werden. Die durchschnittliche Länge der Stapelfasern beträgt zwischen 40 und 100 mm, vorzugsweise 50 bis 90 mm.

Die Vliese können mit Hilfe bekannter Naß- oder Trockenlegeverfahren hergestellt werden. Besonders bevorzugt wird das Filtervlies mit Hilfe des Air Media - Verfahrens hergestellt (Pol and Marble Verfahren, siehe US5993501). Der durchschnittliche Durchmesser der auf diese Weise hergestellten Mineral- und Glasfasern beträgt zwischen 0,5 und 5 µm, vorzugsweise zwischen 0,7 und 3,5 µm.

Das Flächengewicht der Filterschicht beträgt zwischen 15 und 100 g/m², vorzugsweise zwischen 30 und 90 g/m² Je nach Anforderungsprofil kann die Filterschicht aus verschiedenen Lagen aufgebaut sein, wobei die Lagen sowohl aus Mineralfaservliesen und/oder aus Glasfaservliesen aufgebaut werden können.

Die Filterschicht im erfindungsgemäßen Filter enthält zwischen 5 und 25 Gew.-% an Bindern. Für einige Anwendungen ist es von Vorteil, wenn die Filterschicht neben Vliesen die mit Binder verfestigt sind auch zusätzliche Vliese enthalten sind, die keinen Binder, insbesondere keine schmelzbaren, organischen Binder, aufweisen.

Die Dicke der Filterschicht im erfindungsgemäßen Filter beträgt zwischen 1 bis 10 mm, vorzugsweise zwischen 2 und 8 mm.

Die eingesetzte Filterschicht zeigt eine durchschnittliche Luftfiltrations-Effizienz von 20 bis 95% (gemessen gem. EN779). Für Filter mit höherer Luftfiltrations-Effizienz, z.B. von 80% und mehr, beträgt der durchschnittliche Durchmesser der Mineral- und Glasfasern zwischen 3,0x10⁻⁵ bis 4,1x10⁻⁵ inches (0,76µm - 1,04pm).

Bei der erfindungsgemäß eingesetzten Deckschicht handelt es sich um ein textiles Gebilde aus synthetischen, polymeren Fasern. Als textiles Gebilde kommen Vliese, Gewebe, Gelege, Gewirke und Gestricke zum Einsatz, bevorzugt werden aufgrund der technischen Verfügbarkeit Vliese.

Bei den Vliesen handelt es sich um Naßvliesstoffe, Spinnvliesstoffe oder trockengelegte Vliesstoffe, die mittels thermischer und/oder chemischer Bindung und/oder mechanischer Verfestigung verfestigt sind. Bei den Vliesen handelt es sich um Stapelfaservliese und/oder Spinnvliesstoffe.

Die bevorzugten Ausführungsformen für die nachfolgend bezeichneten Spinnvliesstoffe gelten auch für Stapelfaservliese.

Spinnvliesstoffe, d.h. sogenannte Spunbonds, sind bereits im Zusammenhang mit der Stützvliesschicht beschrieben worden. Sie werden durch eine Wirrablage von frisch schmelzgesponnenen Filamenten erzeugt.

Geeignete Polymermaterialien sind beispielsweise Thermoplaste, vorzugsweise Polyamide, wie z.B. Polyhexamethylen-diadipamid, Polycaprolactam, aromatische oder teilaromatische Polyamide ("Aramide"), aliphatische Polyamide, wie z.B. Nylon, teilaromatische oder vollaromatische Polyester, Polycarbonate (PC), Polyphenylensulfid (PPS), Polyphenylenoxid (PPO), Polystyrol (PS), Polyvinylcarbazol (PVK), Polyacetal (POM), Polyarylether, Polyarylsulfon, Polyethersulfon, Polymere mit Ether- und Keto-gruppen, wie z.B. Polyetherketone (PEK) und Poly-etheretherketon (PEEK), Polyolefine, wie z.B. Polyethylen oder Polypropylen, oder Polybenzimidazole.

Die bevorzugten Ausführungsformen für die im Zusammenhang mit der Stützvliesschicht beschrieben Spinnvliese gelten auch für die Deckschicht, wobei das Flächengewicht der Deckschicht zwischen 10 und 50 g/m², vorzugsweise 15 und 30 g/m², beträgt

Die Deckschicht weist eine hohe Luftdurchlässigkeit auf und soll u.a. vermieden, dass Fasern der Filterschicht aus dem Filter ausgetragen werden. Zusätzlich wirkt die Deckschicht als Vorfilter für die Filterschicht. ,

Die Deckschicht ist im Wesentlichen frei von Bindern und ausschließlich thermisch verfestigt. Ferner ist es von Vorteil, wenn die Deckschicht nicht vernadelt wurde.

In einer weiteren Ausführungsform der Erfindung weist die Deckschicht mehrere Lagen auf. Bevorzugt sind 2 bis 6 Lagen, wobei mindestens 2 der Lagen unterschiedlich ausgestaltet sind. Das Gesamtgewicht einer solchen mehrschichtigen Deckschicht beträgt zwischen 10 und 50 g/m², vorzugsweise zwischen 15 und 30 g/m².

Die Einzeltiter der Fasern aus synthetischen Polymeren, welche die Deckschicht bilden, beträgt zwischen 0,8 und 16 dtex, vorzugsweise 1 bis 12 dtex.

Die im erfindungsgemäßen Filter vorhandene Deckschicht besitzt eine Luftdurchlässigkeit von mindestens 3000 I/m² sec, vorzugsweise von mindestens 6000 I/m² sec, gemessen gemäß EN ISO 9237.

Bei der erfindungsgemäß eingesetzten Mikrofaser-Vliesschicht handelt es sich um. ein textiles Gebilde aus polymeren Meltblownfasern oder auch Nanofasern.

Das die Mikrofaser-Vliesschicht bildende Mikrofaser-Vlies wird mittels Meltblow-, Jetspin oder ein elektrostatisches Spinnverfahren hergestellt Die Faserdurchmesser betragen weniger als 20µm, vorzugsweise weniger als 10µm.

Geeignete Polymermaterialien sind beispielsweise Thermoplaste, vorzugsweise Polyamide, wie z.B. Polyhexamethylen-diadipamid, Polycaprolactam, aromatische oder teilaromatische Polyamide ("Aramide"), aliphatische Polyamide. wie z.B. Nylon, teilaromatische oder vollaromatische Polyester, Polycarbonate (PC), Polyphenylensulfid (PPS), Polyphenylenoxid (PPO), Polystyrol (PS), Polyvinylcarbazol (PVK), Polyacetal (POM), Polyarylether, Polyarylsulfon, Polyethersulfon, Polymere mit Ether- und Keto-gruppen, wie z.B. Polyetherketone (PEK) und Poly-etheretherketon (PEEK), Polyolefine, wie z.B. Polyethylen oder Polypropylen, oder Polybenzimidazole.

Die bevorzugten Ausführungsformen für die im Zusammenhang mit der Stützvliesschicht beschrieben Spinnvliese gelten auch für die Mikrofaser-Vliese, wobei das Flächengewicht der Mikrofaser-Vliesschicht zwischen 10 und 60 g/m², vorzugsweise 20 und 40 g/m², beträgt. Im Falle von reinen Nanofasern beträgt das Flächengewicht 0,1 - 2 g/m²

Die Mikrofaser-Vliesschicht ist im Wesentlichen frei von Bindern und ausschließlich thermisch verfestigt

In einer weiteren Ausführungsform der Erfindung weist die Mikrofaser-Vliesschicht mehrere Lagen auf. Insbesondere bei höheren Flächengewichten sind mehrere Lagen bevorzugt, wobei mindestens zwei der Lagen auch unterschiedlich ausgestaltet sein können. Das Gesamtgewicht einer solchen mehrschichtigen Mikrofaser-Vliesschicht beträgt zwischen 20 und 120 g/m², vorzugsweise zwischen 20 und 80 g/m², Bei reinen Nanofaserschichten beträgt das Gesamtflächengewicht 0,2 bis 4g/m².

Die Herstellung des erfindungsgemäßen Filters erfolgt mittels bekannter, dem Fachmann zugänglicher, Verfahren. Geeignete Verfahren sind beispielsweise in US-A-5993501 aufgezeigt, die Bildung von Spinnvliesen gehört ebenfalls zum Standardwissen des Fachmanns.

Die Herstellung des Filters erfolgt durch Bildung der Stützvliesschicht, Aufbringen der Filterschicht, vorzugsweise in einer solchen Art und Weise, dass der in der Filterschicht vorhandene Binder noch nicht vollständig verfestigt ist. Die Endverfestigung erfolgt in einem Ofen bzw. Trockner, ggf. unter Zuhilfenahme eines Kalanders. Sofern erforderlich kann noch zusätzlicher Binder aufgebracht werden. Dies ist insbesondere dann notwendig, wenn die anderen Schichten (Deckschicht bzw. Mikrofaser-Vliesschicht) keinen Binder enthalten.

Die Bildung der Filterschicht kann separat oder direkt auf der Stützvliesschicht erfolgen.

Die Bildung der Deckschicht kann separat oder direkt auf der Filterschicht erfolgen.

Die Bildung der Mikrofaser-Vliesschicht kann separat oder direkt auf der Deckschicht erfolgen. In einer weiteren Ausführungsform der Erfindung wird die Mikrofaser-Vliesschicht zwischen der Stützvliesschicht und der Filterschicht eingebaut. In diesem Fall kann die Mikrofaser-Vliesschicht direkt auf der Stützvliesschicht erzeugt werden oder vorkonfektioniert eingebaut werden. Ferner kann die Mikrofaser-Vliesschicht auch auf beiden Seiten der Stützvliesschicht vorliegen.

Des Weiteren kann die Mikrofaser-Vliesschicht auch separat auf der Deckschicht erzeugt bzw. Mit dieser verbunden werden. Anschließend wird der Composite aus Deckschicht und Mikrofaser-Vliesschicht mit der Filterschicht verbunden.

Die erfindungsgemäßen Filter werden in der Luft/Gas- und Flüssigkeitsfiltration, insbesondere im Automobilsektor, in Klimaanlagen, Innenraumfiltern, Pollenfiltern, Reinraumfiltern, Haushaltsfiltern, sowie als Ölfilter und Hydraulikfilter eingesetzt.

Gegenstand der vorliegenden Erfindung sind somit auch Filtermodule bzw. Kartuschen, die den erfindungsgemäßen Filter enthalten. Hierbei werden die Filter in plissierter Form in Gehäuse oder andere Ummantellungen eingebaut. Entsprechende Ausgestaltungen sind US-A-5883501 zu entnehmen.

Ein weiteres Einsatzgebiet der erfindungsgemäßen Filter sind so genannte LEF (Low Efficiency Filter) und HEPA (High Efficiency Particulate (Air) Filter) Filter. wobei letztere auch in der Wasseraufbereitung eingesetzt werden können. Die HEPA Filter werden auch gemäß EN 1822 als Filterklassen H10 bis H14 bezeichnet,

Ein weiteres Einsatzgebiet der erfindungsgemäßen Filter sind so genannte HVAC und sogenannte ASHRAE Filtermedien.

Ein weiteres Einsatzgebiet der erfindungsgemäßen Filter sind so genannte ULPA Filter, d.h. Filter für Rein- und Reinsträume (ISO Klasse 1000 und besser). ULPA Filter werden auch gemäß EN 1822 als Filterklassen U15 bis U17 bezeichnet.

## Patentansprüche

1. Filter aus einem mehrlagigen Filtermedium umfassend:
a) mindestens eine Stützvliesschicht aus synthetischen, polymeren Fasern wobei
a1) das Vlies ein Flächengewicht von 10 bis 500 g/m² aufweist,
a2) das Vlies teilverstreckte und verstreckte Fasern aufweist,
a3) der Titer der verstreckten Fasern im Bereich 2 bis 12 dtex liegt,
a4) der Titer der teilverstreckten Fasern im Bereich 8 bis 25 dtex liegt,
a5) das Vlies eine Luftdurchlässigkeit von mindestens 2500 l/m²sec aufweist,
b) mindestens eine Filterschicht die auf mindestens einer Seite des Stützvlieses angebracht ist,
c) mindestens eine Deckschicht die auf der der Stützschicht abgewandten Seite der Filterschicht angebracht ist,
d) gegebenenfalls mindestens eine Mikrofaser-Vliesschicht.

2. Filter gemäß Anspruch 1, **dadurch gekennzeichnet, dass** die Stützvliesschicht plissierfähig ist.

3. Filter gemäß Anspruch 1 oder 2, **dadurch gekennzeichnet, dass** die Stützvliesschicht ein Naßvliesstoff, Spinnvliesstoff oder trockengelegter Vliesstoff ist.

4. Filter gemäß Anspruch 3, **dadurch gekennzeichnet, dass** die Stützvliesschicht mittels thermischer und/oder chemischer Bindung und/oder mechanischer Verfestigung verfestigt sind.

5. Filter gemäß Anspruch 1 bis 4, **dadurch gekennzeichnet, dass** die Stützvliesschicht Stapelfaservliese und/oder Spinnvliesstoffe umfasst.

6. Filter gemäß Anspruch 1 bis 5, **dadurch gekennzeichnet, dass** die Stützvliesschicht ein Spinnvliesstoffe ist.

7. Filter gemäß Anspruch 1 bis 6, **dadurch gekennzeichnet, dass** die Stützvliesschicht aus Thermoplasten, insbesondere Polyester und/oder Polyolefine, gebildet wird.

8. Filter gemäß Anspruch 1 bis 7, **dadurch gekennzeichnet, dass** die Stützvliesschicht ein schmelzbinderverfestigter Vliesstoff ist, welcher Träger-und Schmelzklebefasern enthält und vorzugsweise als Bikomponentenfaser vorliegt.

9. Filter gemäß Anspruch 1 bis 8, **dadurch gekennzeichnet, dass** die Stützvliesschicht ein Flächengewicht zwischen 20 und 200 g/m², vorzugsweise 20 und 200 g/m², insbesondere 40 und 200 g/m², aufweist.

10. Filter gemäß Anspruch 1 bis 8, **dadurch gekennzeichnet, dass** die Stützvliesschicht ein Prägemuster aus statistisch verteilten oder rapportmäßig angeordneten, kleinflächigen Einprägungen, vorzugsweise eine Punktprägung, aufweist, bei der die Preßfläche des Vlieses 5 bis 30 % beträgt

11. Filter gemäß Anspruch 10, **dadurch gekennzeichnet, dass** die Einprägungen eine Größe von 0,2 bis 4 mm², vorzugsweise 0,5 bis 2 mm², aufweisen.

12. Filter gemäß Anspruch 11, **dadurch gekennzeichnet, dass** die Vlieslagen unterschiedlich sind.

13. Filter gemäß Anspruch 1 bis 12, **dadurch gekennzeichnet, dass** die Stützvliesschicht aus verstreckten und teilverstreckten Fasern aufgebaut wird und der Anteil an teilverstreckten Fasern im Stützvlies mindestens 5 Gew.% (bezogen auf das Gesamtgewicht der Stützvliesschicht), vorzugsweise mindestens 10 Gew.%, besonders bevorzugt mindestens 20 Gew%., beträgt.

14. Filter gemäß Anspruch 1 bis 13, **dadurch gekennzeichnet, dass** die verstreckten Fasern einen Doppelbrechungsindex von 130 - 150 x10⁻³ aufweisen.

15. Filter gemäß Anspruch 1 bis 14, **dadurch gekennzeichnet, dass** die teilverstreckte Fasern einen Doppelbrechungsindex von 50- 120 x10⁻³ aufweisen.

16. Filter gemäß Anspruch 1 bis 15, **dadurch gekennzeichnet, dass** die verstreckten Fasern einen geringeren Titer als die teilverstreckten Fasern aufweisen.

17. Filter gemäß Anspruch 1 bis 16, **dadurch gekennzeichnet, dass** die verstreckten und teilverstreckten Fasern in Form konkreter Schichten im Stützvliesstoff vorliegen und/oder miteinander vermischt sind.

18. Filter gemäß Anspruch 1 bis 17, **dadurch gekennzeichnet, dass** die verstreckten und teilverstreckten Fasern einen Gradienten im Stützvliesstoff bilden, der vorzugsweise von außen nach innen (bezogen auf den Querschnitt) ansteigt.

19. Filter gemäß Anspruch 1 bis 18, **dadurch gekennzeichnet, dass** die Filterschicht aus Mineralfaservliese und/oder Glassfaservliese, vorzugsweise trocken gelegten Glasfaservliese gebildet wird.

20. Filter gemäß Anspruch 1 bis 19, **dadurch gekennzeichnet, dass** die Filterschicht biolösliche Gläser umfasst.

21. Filter gemäß Anspruch 1 bis 20, **dadurch gekennzeichnet, dass** die Filterschicht eine durchschnittliche Luftfiltrations-Effizienz von 20 bis 95% (gemessen gem. EN779) aufweist.

22. Filter gemäß Anspruch 1 bis 21, **dadurch gekennzeichnet, dass** die Deckschicht Stapelfaservliese und/oder Spinnvliesstoffe aus synthetischen Polymeren umfasst.

23. Filter gemäß Anspruch 1 bis 22, **dadurch gekennzeichnet, dass** die Mikrofaser-Vliesschicht polymere Meltblownfasern und/oder Nanofasern umfasst.

24. Verfahren zur Herstellung des Filters gemäß Anspruch 1 umfassend die Schritte:
a) Bildung einer Stützvliesschicht definiert in den Ansprüchen 1 bis 18,
b) Aufbringen der Filterschicht definiert in den Ansprüchen 18 bis 21,
c) Aufbringen der Deckschicht definiert in Anspruch 22,
d) Ggf. Aufbringen der Mikrofaser-Vliesschicht umfassend Meltblownfassern und/oder Nanofasern.

25. Verwendung der Filter definiert in den Ansprüchen 1 bis 23 in der Luft/Gas- und Flüssigkeitsfiltration.

26. Filtermodule enthaltend ein Gehäuse und mindestens einen Filter definiert in den Ansprüchen 1 bis 23

## Claims

1. A filter composed of a multi-ply filter medium comprising:
a) at least one non-woven stiffening layer of synthetic, polymer fibres,
a1) the non-woven fabric having a weight per unit area of 10 to 500 g/m²,
a2) the non-woven fabric having partially oriented and oriented fibres,
a3) the titre of the oriented fibres ranging from 2 to 12 dtex,
a4) the titre of the partially oriented fibres ranging from 8 to 25 dtex,
a5) the non-woven fabric having an air permeability of at least 2500 l/m²sec,
b) at least one filtration layer, which is attached to at least one side of the non-woven stiffening,
c) at least one covering layer, which is attached to the side of the filtration layer remote from the stiffening layer,
d) where necessary, at least on non-woven microfibre fabric layer.

2. The filter according to Claim 1, **characterised in that** the non-woven stiffening layer is pleatable.

3. The filter according to Claim 1 or 2, **characterised in that** the non-woven stiffening layer is a wet non-woven fabric, a spinbonded fabric or a dry-laid non-woven fabric.

4. The filter according to Claim 3, **characterised in that** the non-woven stiffening layer is consolidated by means of thermal and/or chemical bonding and/or mechanical consolidation.

5. Filter according to Claim 1 to 4, **characterised in that** the non-woven stiffening layer comprises staple fibre non-woven fabrics and/or spinbonded fabrics.

6. The filter according to Claim 1 to 5, **characterised in that** the non-woven stiffening layer is a spinbonded fabric.

7. The filter according to Claim 1 to 6, **characterised in that** the non-woven stiffening layer is formed from thermoplastics, in particular polyester and/or polyolefins.

8. The filter according to Claim 1 to 7, **characterised in that** the non-woven stiffening layer is a fusible binder-consolidated non-woven fabric, which comprises carrier and hot melt adhesive fibres and is preferably present as a bi-component fibre.

9. The filter according to Claim 1 to 8, **characterised in that** the non-woven stiffening layer has a weight per unit area between 20 and 200 g/m², preferably between 20 and 200 g/m², in particular between 40 and 200 g/m².

10. The filter according to Claim 1 to 8, **characterised in that** the non-woven stiffening layer has an embossed pattern of statistically distributed or small, repeat embossings, preferably stippling, in which the compressed area of the non-woven fabric is 5 to 30 %.

11. The filter according to Claim 10, **characterised in that** the embossings are 0.2 to 4 mm², preferably 0.5 to 2 mm², in size.

12. The filter according to Claim 11, **characterised in that** the non-woven layers differ.

13. The filter according to Claim 1 to 12, **characterised in that** the non-woven stiffening layer is made up of oriented and partially oriented fibres and the proportion of partially oriented fibres in the non-woven stiffening is at least 5 % by weight (in relation to the total weight of the non-woven stiffening layer), preferably at least 10 % by weight, and particularly preferably at least 20 % by weight.

14. The filter according to Claim 1 to 13, **characterised in that** the oriented fibres have a birefringence index of 130 - 150 x 10⁻³.

15. The filter according to Claim 1 to 14, **characterised in that** the partially oriented fibres have a birefringence index of 50 - 120 x 10⁻³.

16. The filter according to Claim 1 to 15, **characterised in that** the oriented fibres have a lower titre than the partially oriented fibres.

17. The filter according to Claim 1 to 17, **characterised in that** the oriented and partially oriented fibres occur in the form of concrete layers in the non-woven stiffening fabric and/or are mixed with one another.

18. The filter according to Claim 1 to 17, **characterised in that** the oriented and partially oriented fibres form a gradient in the non-woven stiffening fabric, which preferably increases from the outside inwards (in relation to the cross-section).

19. The filter according to Claim 1 to 18, **characterised in that** the filtration layer is formed from non-woven mineral fibre fabrics and/or non-woven glass fibre fabrics, preferably dry-laid non-woven glass fibre fabrics.

20. The filter according to Claim 1 to 19, **characterised in that** the filtration layer comprises biosoluble glasses.

21. The filter according to Claim 1 to 20, **characterised in that** the filtration layer has an average air filtration efficiency of 20 to 95% (measured according to EN779).

22. The filter according to Claim 1 to 21, **characterised in that** the covering layer comprises staple fibre non-woven fabrics and/or spin-bonded fabrics of synthetic polymers.

23. The filter according to Claim 1 to 22, **characterised in that** the non-woven microfibre layer comprises polymer meltblown fibres and/or nanofibres.

24. A method for manufacturing the filter according to Claim 1, comprising the following steps:
a) formation of a non-woven stiffening layer defined in Claims 1 to 18,
b) application of the filtration layer defined in Claims 18 to 21,
c) application of the covering layer defined in Claim 22,
d) when necessary, application of the non-woven microfibre layer, comprising meltblown fibres and/or nanofibres.

25. Use of the filters defined in Claims 1 to 23 in filtration of air/gas and liquids.

26. Filter modules including a housing and at least one filter defined in Claims 1 to 23.

## Revendications

1. Filtre fait d'un milieu de filtre à plusieurs épaisseurs comprenant :
a) au moins une couche de non-tissé de support en fibres synthétiques polymères sachant que
a1) le non-tissé présente un poids de surface de 10 à 500 g/m²,
a2) le non-tissé présente des fibres partiellement étirées et étirées,
a3) le titre des fibres étirées est compris entre 2 et 12 dtex,
a4) le titre des fibres partiellement étirées est compris entre 8 et 25 dtex,
a5) le non-tissé présente une perméabilité à l'air d'au moins 2500 I/m² sec,
b) au moins une couche de filtre qui est placée sur au moins un côté du non-tissé de support
c) au moins une couche de recouvrement qui est placée sur le côté de la couche de filtre tournée vers la couche de support
d) le cas échéant au moins une couche de non-tissé en microfibres.

2. Filtre selon revendication 1, **caractérisé en ce que** la couche de non-tissé de support peut être plissée.

3. Filtre selon revendication 1 ou 2, **caractérisé en ce que** la couche de non-tissé de support est un tissu non-tissé par voie humide, un tissu non-tissé filé-lié ou un tissu non-tissé par voie sèche.

4. Filtre selon revendication 3, **caractérisé en ce que** la couche de non-tissé de support est consolidée au moyen d'un liage thermique et/ou chimique et/ou d'une consolidation mécanique.

5. Filtre selon revendication 1 à 4, **caractérisé en ce que** la couche de non-tissé de support comprend des non-tissés en fibres discontinues et/ou des tissus non-tissés filés-liés.

6. Filtre selon revendication 1 à 5, **caractérisé en ce que** la couche de non-tissé de support est un tissu non-tissé filé-lié.

7. Filtre selon revendication 1 à 6, **caractérisé en ce que** la couche de non-tissé de support est faite en matières thermoplastiques, notamment polyester et/ou polyoléfine.

8. Filtre selon revendication 1 à 7, **caractérisé en ce que** la couche de non-tissé de support est un tissu non-tissé consolidé par liant fusible, qui contient de fibres collé au fondu et des fibres de substrat et est disponible de préférence en ta »t que fibre à deux composants.

9. Filtre selon revendication 1 à 8, **caractérisé en ce que** la couche de non-tissé de support présente un poids de surface compris entre 20 et 200 g/m², de préférence entre 20 et 200 g/m², notamment entre 40 et 200 g/m².

10. Filtre selon revendication 1 à 8, **caractérisé en ce que** la couche de non-tissé de support présente un motif de gravure fait de petites surfaces, réparties statistiquement ou placées selon le rapport, de préférence une gravure ponctuelle, pour laquelle la surface de pressage du non-tissé est de 5 à 30%.

11. Filtre selon revendication 10, **caractérisé en ce que** les gravures présentent une taille de 0,2 à 4 mm², de préférence de 0,5 à 2 mm².

12. Filtre selon revendication 11, **caractérisé en ce que** les épaisseurs de non-tissé sont différentes.

13. Filtre selon revendication 1 à 12, **caractérisé en ce que** la couche de non-tissé de support est constituée de fibres étirées et partiellement étirées et la part de fibres partiellement étirées dans le non-tissé de support est d'au moins 5% en poids (par rapport au poids total de la couche de non-tissé de support), de préférence 10% en poids, de manière particulièrement préférée 20% en poids.

14. Filtre selon revendication 1 à 13, **caractérisé en ce que** les fibres étirées présentent un indice de réfraction double de 130 - 150 x 10⁻³.

15. Filtre selon revendication 1 à 14, **caractérisé en ce que** les fibres partiellement étirées présentent un indice de réfraction double de 50 - 120 x 10⁻³.

16. Filtre selon revendication 1 à 15, **caractérisé en ce que** les fibres étirées présentent un titre inférieur à celui des fibres partiellement étirées.

17. Filtre selon revendication 1 à 16, **caractérisé en ce que** les fibres étirées et partiellement étirées sont disponible sous la forme de couches concrètes dans le tissu de non-tissés de support et/ou sont mélangées entre elles.

18. Filtre selon revendication 1 à 17, **caractérisé en ce que** les fibres étirées et partiellement étirées forment un gradient dans le tissu de non-tissé de support, qui augmente de préférence de l'extérieur vers l'intérieur (par rapport à la section).

19. Filtre selon revendication 1 à 18, **caractérisé en ce que** la couche de filtre est faite de non-tissés de fibres minérales et/ou non tissés de fibres de verre, de préférence de non-tissés de fibres de verre par voie sèche.

20. Filtre selon revendication 1 à 19, **caractérisé en ce que** la couche de filtre comprend des verres biosolubles.

21. Filtre selon revendication 1 à 20, **caractérisé en ce que** la couche de filtre présente une efficacité de filtration de l'air moyenne de 20 à 95% (mesurée selon EN779).

22. Filtre selon revendication 1 à 21, **caractérisé en ce que** la couche de recouvrement comprend des non-tissés de fibres discontinues et/ou tissus de non-tissés filés-liés en polymères synthétiques.

23. Filtre selon revendication 1 à 22, **caractérisé en ce que** la couche de non-tissé de microfibres comprend des fibres meltblown polymères et/ou des nanofibres.

24. Procédé de fabrication du filtre selon revendication 1 comprenant les étapes :
a) Formation d'une couche de non-tissé de support définie dans les revendications 1 à 18,
b) Pose de la couche de filtre définie dans les revendications 18 à 21,
c) Pose de la couche de recouvrement définie dans la revendication 22,
d) Le cas échéant, pose de la couche de non-tissé en microfibres comprenant des fibres meltblown et/ou des nanofibres.

25. Utilisation des filtres définis dans les revendications 1 à 23 dans la filtration d'air, de gaz et de liquide.

26. Module de filtre comprenant un boîtier et au moins un filtre défini dans l'une des revendications 1 à 23.
